# EUROPÄISCHE PATENTSCHRIFT

(11) **EP 0 848 903 B1**
(45) Veröffentlichungstag und Bekanntmachung des Hinweises auf die Patenterteilung: **01.09.2004**
(21) Anmeldenummer: 97203867.3
(22) Anmeldetag: 09.12.1997
(51) Int. Cl.: A01G 9/10

(54) **Verfahren und Vorrichtung zur Herstellung von verdichteten Substratzapfen aus losem Material**
Process and device for making compressed substrate plugs from loose material
Méthode et dispositif pour fabriquer des bouchons de substrat compressé à partir de matière en vrac

(30) Priorität: 18.12.1996 NL 1004818
(43) Veröffentlichungstag der Anmeldung: 24.06.1998
(73) Patentinhaber: Boomkwekerij Bert Rombouts B.V., 5527 JT Hapert (NL)
(72) Erfinder: Clerx, Henricus Petrus Maria, 5991 PT Baarlo (NL); Rombouts, Norbert Johan Leonard, 5527 JT Hapert (NL)
(74) Vertreter: Timmers, Cornelis Herman Johannes

(56) Entgegenhaltungen:
- WO-A-92/03914
- FR-A- 2 481 060
- GB-A- 809 861
- NL-A- 7 310 730

## Beschreibung

Die Erfindung bezieht sich auf ein Verfahren und eine Einrichtung zum Herstellen von Substratzapfen durch das unter Druck Verdichten losen Substratmaterials.

Eine derartiges Verfahren und zugehörige Vorrichting sind bereits aus der WO 92/03914 bekannt. Nach diesem bekannten Verfahren wird das lose Substratmaterial durch Vakuumsaugen zu einem Basisstrang verdichtet und anschließend mit einer aus porösem Papier geformten Umhüllung umwickelt. Der Basisstrang wird an ein Schneidorgan transportiert und dort in einzelne Substratzapfen zerschnitten.

Dieses bekannte Verfahren und diese bekannte Vorrichtung besitzen eine Mehrzahl von Nachteilen.

Dadurch daß die Verdichtung durch Vakuumsaugen erfolgt, kann höchstens ein Druck gleich einer Atmosphäre ausgeübt werden; jedoch wird in der Praxis (u.a. durch Entweichen) ein solcher Druck nie realisierbar sein.

Der erreichte Druck ist selbstverständlich abhängig von der Porosität der Papierumhüllung. Die Saugwirkung - und damit der ausgeübte Druck - werden, je nachdem mehr Material zu dem Strang beiträgt, nachlassen. Dadurch ist der Druck unregelmäßig verteilt, aufgrunddessen ein Substratzapfen mit nicht vorhersagbaren Dichtevariationen in dessen ganzem Volumen entsteht.

Die bekannte Vorrichtung erfordert komplizierte, sich bewegende Abdichtungen und sollte komplizierte Bewegungen ausführen, was sie aufwendig und störungsanfällig macht. Deshalb wird häufig eine Technik benutzt, bei der lose abgelagertes Substratmaterial in Übermaß in und über aufeinanderfolgende Aufnahmebehälter ausgeschüttet wird, über das Niveau des Behälterrandes abgestrichen und durch Anpressen in dem Behälter verdichtet wird. Eine derartige Technik ist zum Beispiel aus der NL-A-7310730 bekannt. Diese bekannte Technik hat den Nachteil, daß viel überflüssiges Substratmaterial außerhalb der Behälter gerät, und daß durch die Wiederverwendung dieses überflüssigen Materials sich die Struktur des Substratmaterials geändert hat, was nachteilig für die Qualität der Gewächse ist und ein unregelmäßiges Wachstumstempo bewirkt. Ein weiterer Nachteil dieser bekannten Technik besteht darin, daß das Substratmaterial nicht genau dosiert in die dazu bestimmten Aufnahmebehälter gerät. Weil eine abgemessene Menge Substratmaterial zugeführt wird, und die Dichte der zugeführten Masse stark variieren kann, wird das Gewicht der abgemessenen Menge ebenfalls stark variieren. Hierdurch entsteht ebenfalls ein unregelmäßiges Wachstumstempo, was vor allem fatal ist bei der nicht-selektiven automatischen Ernte von Gewächsen.

Die französische Patentschrift 2 481 060 beschreibt eine Vorrichtung zum Formen von Substratzapfen, bei der das Substratmaterial lose auf ein Fließband ausgeschüttet wird und aus diesem lose ausgeschütteten Material mit Hilfe einer mit Löchern versehenen Form die Zapfen "ausgestanzt" werden. Hier treten alle oben beschriebenen Probleme und Nachteile auf.

Die britische Patentschrift 809 861 beschreibt eine sehr einfache Vorrichtung zum Formen von Substratzapfen; ein zylindrischer Behälter wird mit Substratmaterial vollgeschüttet, das anschließend mittels eines Preßkolbens verdichtet wird; dann wird die Unterstützung des Zylinders weggenommen und der erhaltene Zapfen ausgestoßen. In dieser Weise können keine Substratzapfen mit einer vorbestimmten Zusammensetzung erhalten werden.

Der vorliegenden Erfindung liegt die Aufgabe zugrunde, diese Nachteile in einer einfachen und kostengünstigen Weise auszuräumen.

Die Lösung besteht darin, daß nachdem, wie aus GB-A-809 861 bekannt, das lose Substratmaterial in einen im wesentlichen zylindrischen Füllraum ausgeschüttet und, die in dem Füllraum befindliche Substratmaterialsäule durch einen axial ausgeübten Druck verdichtet worden ist, anschließend ein Teil des in dem Füllraum befindlichen, zusammengepreßten Substratmaterials in einem abgemessenen Volumen abgeführt wird.

Vorteile davon sind, daß der resultierende Substratzapfen das richtige Gewicht hat, ein genau dosiertes Volumen mit einer nahezu uniforme Dichte aufweist, und ziemlich genau reproduzierbar ist.

Vorzugsausführungsformen des Verfahrens gemäß vorliegender Erfindung sind in den Unteransprüchen 2 - 4 beschrieben worden.

Nach Anspruch 2 wird der Füllraum bis eine solche Höhe mit Substratmaterial gefüllt, daß die resultierende Höhe nach Verdichtung zumindestens der Höhe des abgeführten Teils entspricht. Diese Maßnahme gewährleistet, daß der resultierende Substratzapfen ein genau dosiertes Volumen hat.

Gemäß der in Anspruch 3 beschriebene Maßnahme hängt der axial ausgeübte Druck nach einem vorbekannten Verhältnis mit der erwünschten Enddichte des abgeführten Substratmaterialvolumens zusammen. Diese Maßnahme gewährleistet, daß der resultierende Substratzapfen das richtige Gewicht hat.

Die Vorrichtung zur Anwendung des Verfahrens nach der vorliegenden Erfindung weist nach Anspruch 5 einen im wesentlichen zylindrischen Füllraum auf, der von einer im wesentlichen zylindrischen Füllhülse und einem daran anschließenden Dosiervolumen und zumindestens einem bis in den Füllraum hineinreichenden Verdichtungsorgan zum Verdichten des in dem Füllraum befindlichen Substratmaterials bestimmt wird. Der Einsatz eines Verdichtungsorgans, um das lose abgelagerte, in den Füllraum geschüttete Substratmaterial zu verdichten, hat den Vorteil, daß der ausgeübte Druck genau einstelbar ist, und eine regelmäßige Druckverteilung gewährleistet ist. Die Vorrichtung ist einfach im Aufbau und deshalb kostengünstig realisierbar.

Bei einer günstigen Ausbildung ist das Verdichtungsorgan ein Stampfer, jedoch kann es auch eine Schneckenschraube sein.

Nach Anspruch 8 umfaßt das Dosiervolumen dabei eine an die Füllhülse anschließende, im wesentlichen zylindrische Füllhöhle zum Aufnehmen eines abgemessenen Subtratmaterialvolumens.

Wenn nach Anspruch 9 die Füllhülse und das Dosiervolumen zueinander verlagerbar sind, so ist ein Schneidorgan, das die zusammengepreßte Substratmaterialsäule in einzelne Substratzapfen zerschneidet, überflüssig.

Durch Anwendung dieser Maßnahme nach Anspruch 10 wird erreicht, daß ein genau dosiertes Substratmaterialvolumen in einem dazu bestimmten Aufnahmebehälter angeordnet wird. Das Substratmaterial kann hiernach weiter in dem Aufnahmebehälter angepreßt werden, damit bewirkt wird, daß der zylindrische Substratzapfen die konische Form des Aufnahmebehälters annimmt, oder zur weiteren Bearbeitung abgeführt werden kann.

Die Erfindung wird nachfolgend mehr in Einzelheiten anhand der Zeichnung erläutert. Dabei zeigt:
- Fig. 1: eine schematische Darstellung einer Seitenansicht eines Beispiels einer Ausführungsform der vorliegenden erfindungsgemäßen Vorrichtung; und
- Fig. 2: eine schematische Darstellung einer perspektivischen Ausführungsform des in Fig. 1 dargestellten Dosierorgans.

In den unterschiedlichen Figuren beziehen sich gleiche Bezugsziffern auf gleiche Elemente oder Elemente mit einer gleichen Funktion.

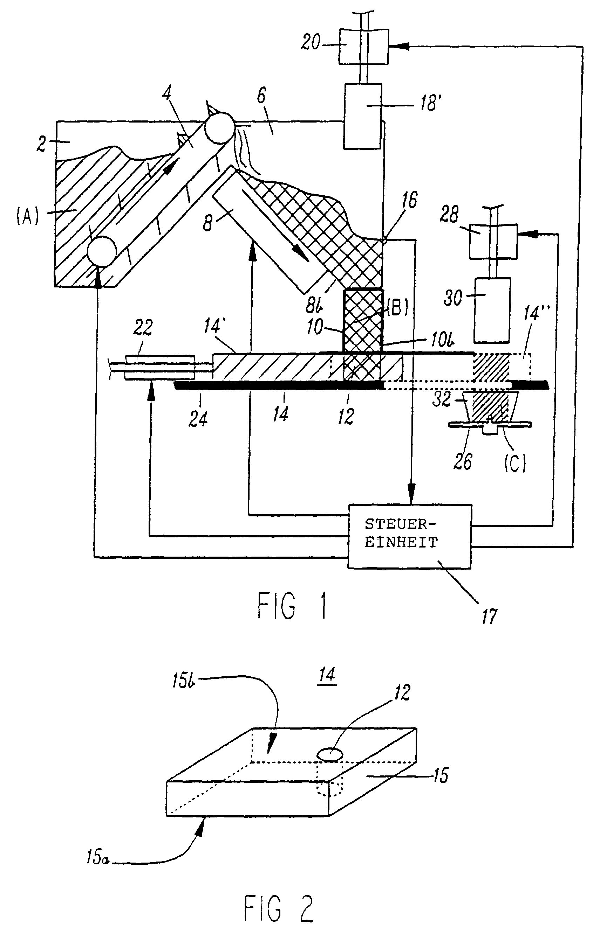

Die Figur 1 zeigt eine Vorrichtung, aufgebaut aus einem Vooratsbunker 2, in den regelmäßig eine Menge lose abgelagertes Substratmaterial (A) ausgeschüttet wird, und einen Bandförderer 4 in der Form eines Kettenförderers, welcher einen kontinuierlichen Substratmaterialstrom aus dem Vorratsbunker 2 heraus an eine Zufuhrseite eines Einführungsorgans 6 transportiert, das aus einer schräg nach unten gerichteten Schüttelrinne 8 besteht, deren eine Abfuhrende 8b an eine im wesentliche senkrecht angeordnete, im wesentlichen zylindrische Füllhülse 10 anschließt. Die Füllhülse 10 hat ein Abfuhrende 10b, das an ein Dosierorgan 14 anschließt. Das in Fig. 2 dargestellte Dosierorgan 14 umfaßt eine Schiebeplatte 15 mit einer Unter- und einer Oberseite, beziehungsweise 15a und 15b, zwischen denen sich eine im wesentlichen zylindrische Dosierhöhle 12 erstreckt. Der Durchmesser der Dosierhöhle 12 gleicht nahezu dem des Abfuhrendes 10b der Füllhülse 10. Die Höhe der Füllhülse 10 ist zumindestens höher als die der Füllhöhle 12. Nahe dem Abfuhrende 8b der Schüttelrinne 8 befindet sich ein Sensor 16, dessen Signal über eine nur sehr schematisch dargestellte Steuerungseinheit 17 die Schüttelrinne 8 abschaltet, sobald das Niveau der sich in der Füllhülse befindenden Substratmittelsäule (B) über den Sensor 16 hinausreicht.

Am Anfang eines Bearbeitungszyklus befindet sich ein von einem ersten Luftzylinder 20 bedienter Stampfer 18, dessen Durchmesser einigermaßen kleiner als jener der Füllhülse 10 ist, in einer mit 18' angedeuteten Ausgangsposition, und befindet sich das von einem zweiten Luftzylinder 22 bediente Dosierorgan 14 in einer ersten, mit 14' angedeuteten Ausgangsposition, in der das Abfuhrende 10b der Füllhöhle 10 an die Dosierhöhle 12 anschließt. Die Schüttelrinne 8 ist über Steuerungseinheit 17 eingeschaltet und schüttet eine Menge Substratmaterial (A) in die Dosierhöhle 12 und die Füllhülse 10 aus. Sobald der Sensor 16 von der in der Dosierhöhle 12 und Füllhülse 10 befindlichen Substratmaterialsäule (B) unterbrochen wird, hält die Steuerungseinheit 17 die Zufuhr über die Schüttelrinne 8 an. Die Steuerungseinheit 17 steuert den Luftzylinder 20 an, der den Stampfer 18 aus der Ausgangsposition 18' in Richtung auf die Füllhülse 10 in eine zweite Position bewegt, in der der Stampfer 18 die Substratmaterialsäule (B) mit einem vorbestimmten Druck zusammenpreßt, welcher Druck gemäß einem vorbekannten Verhältnis mit der erwünschten Enddichte des sich in dem Füllraum 10, 12 befindlichen Substratmaterials zusammenhängt. Der Druck, mit dem der Stampfer 18 die Substratmaterialsäule zusammenpreßt, ist dabei proportional zu dem Luftdruck in dem Luftzylinder 20. Nachdem der Stampfer 18 die Substratmaterialsäule zusammengepreßt hat, bleibt dieser vorläufig in dem zweiten Stand stehen.

Über die Steueurungseinheit 17 bewegt der Luftzylinder 22 hiernach das Dosierorgan 14 aus der ersten Ausgangsposition 14' in horizontale Richtung entlang einer Stütze 24 in eine Endlage, die mit 14" angedeutet ist, und in der das Dosierorgan 14 mit unterbrochenen Linienteilen dargestellt ist. Dabei wird das abgemessene Substratmaterialvolumen (C), das sich in der Dosierhöhle 12 des Dosierorgans 14 befindet, bis über eine nicht näher dargestellte Förderlinie 26 von Ausnahmenbehältern 32 abgeführt. Anschließend steuert die Steuerungseinheit 17 einen dritten Luftzylinder 28 an, welcher Luftzylinder ein Auswerforgan 30 bedient, das das zusammengepreßte, sich in der Dosierhöhle befindende Substratmaterialvolumen (C) aus dem Dosierorgan 14 heraus in den sich darunter befindenden Aufnahmebehälter 32 drückt. Der Aufnahmebehälter 32 wird mittels der Fördereinrichtung 26 weiter an eine nächste Station transportiert, zum Beispiel eine Vorrichtung zum in dem Aufnahmebehälter 32 Andrücken des ausgeworfenen Substratvolumens (C), oder zum in diesem Anordnen von Saatgut oder Stecklingmaterial. Sobald der Auswerfer 30 über die Steuerungseinheit 17 durch den Luftzylinder 28 zurückgezogen worden ist, bewegt der Luftzylinder 22 das Dosierorgan 14 zurück in die erste, mit 14' angedeutete Ausgangsposition zurück. Der noch in dem zweiten Stand befindliche Stampfer 18 wird über die Steuerungseinheit 17 und den Luftzylinder 20 in Gang gesetzt, und drückt den in der Füllhülse 10 zurückgebliebenen Substratmaterialrest aus der Füllhülse 12 in die Dosierhöhle des Dosierorgans 14. Danach bewegt die Steuerungseinheit 18 (17 Übers.) den Stampfer 18 in die mit 18' angedeutete Ausgangsposition zurück. Hiernach wird die Schüttelrinne 8 über die Steuerungseinheit 17 wiederum in Gang gesetzt und kann der Bearbeitungszyklus wiederholt werden.

Nach einem alternativen, im Rahmen des Hauptanspruchs fallenden Bearbeitungszyklus wird das Substratmaterial nur in die Füllhülse 10 geschüttet und in dieser zusammengepreßt, während die Schiebeplatte 15 des Dosierorgans 14 in einer zweiten, nicht dargestellten, Ausgangsposition das Abfuhrende 10b der Füllhülse 10 abschließt. Nach Verdichtung wird das Dosierorgang 14 in eine erste, mit 14' angedeutete Ausgangsposition verlagert, in der die Dosierhöhle 12 an das Abfuhrende 10b der Füllhülse 10 anschließt. Anschließend drückt der Stampfer 18 das in der Füllhülse 10 vorhandene, bereits verdichtete Substratmaterial zumindestens teilweise in die Dosierhöhle 12. Das Dosierorgan 14 wird hiernach in der vorher beschriebenen Weise in die mit 14" angedeutete Endlage verlagert und entleert, wonach der Bearbeitungszyklus wiederholt werden kann.

Nach dem in einem Aufnahmebehälter Anordnen eines Substratzapfens, kann dieser darin in geeigneter Weise angepreßt werden, um die konische Form des Aufnahmebehälters anzunehmen, oder kann dieser zur weiteren Bearbeitung abgeführt werden.

## Patentansprüche

1. Verfahren zur Herstellung von Substratzapfen durch das unter Druckeinwirkung Verdichten losen Substratmaterials, insbesondere Blumenerde, wobei das lose Substratmaterial (A) in einen im wesentlichen zylindrischen Füllraum (10, 12) ausgeschüttet wird und die in dem Füllraum (10, 12) befindliche Substratmaterialsäule (B) durch einen axial ausgeübten Druck verdichtet wird, **dadurch gekennzeichnet, daß** anschließend ein Teil des sich in dem Füllraum (10, 12) befindenden, zusammengepreßten Substratmaterials in einem abgemessenen Volumen (C) abgeführt wird.

2. Verfahren nach Anspruch 1, bei dem der Füllraum (10,12) bis eine solche Höhe mit Substratmaterial gefüllt wird, daß nach Verdichtung die resultierende Höhe zumindestens der Höhe des abgeführten Teils gleicht.

3. Verfahren nach Anspruch 1 oder 2, bei dem der axial ausgeübte Druck nach einem vorbekannten Verhältnis mit der erwünschten Enddichte des abgeführten Substratmaterialvolumens (C) zusammenhängt.

4. Verfahren nach einem der vorhergehenden Ansprüchen, bei dem das abgemessene Substratmaterialvolumen (C) in einem dazu bestimmten Aufnahmebehälter (32) angeordnet wird.

5. Vorrichtung zur Anwendung des Verfahrens nach Anspruch 1, umfassend zumindestens ein Einführungsorgan zum Aufnehmen von lose abgelagertem Substratmaterial und zumindestens einen an das Einführungsorgan anschließenden, im wesentlichen zylindrischen Füllraum, der von einer im wesentlichen zylindrischen Füllhülse (10), und einem daran anschließenden Dosiervolumen (14), und zumindestens einem bis in den Füllraum (10, 12) reichenden Verdichtungsorgan (18) zum Verdichten des in dem Füllraum befindlichen Substratmaterials bestimmt wird.

6. Vorrichtung nach Anspruch 5, **dadurch gekennzeichnet, daß** das Verdichtungsorgan (18) ein Stampfer ist.

7. Vorrichtung nach Anspruch 5, **dadurch gekennzeichnet, daß** das Verdichtungsorgan (18) eine Schneckenschraube (18) ist.

8. Vorrichtung nach einem der Ansprüche 5 - 7, **dadurch gekennzeichnet, daß** das Dosiervolumen (14) eine an die Füllhülse (10) anschließende, im wesentlichen zylindrische Dosierhöhle (12) zum Aufnehmen eines abgemessenen Substratmaterialvolumens (C) umfaßt.

9. Vorrichtung nach einem der Ansprüche 5 - 8, **dadurch gekennzeichnet, daß** die Füllhülse (10) und das Dosiervolumen (14) im wesentlichen senkrecht zur Zentralachse der Füllhülse in einer Fläche zueinander verlagerbar sind.

10. Vorrichtung nach Anspruch 9, **gekennzeichnet durch** mit der Dosierhöhle (12) zusammenwirkende Mittel (30) zum in einen dazu bestimmten Aufnahmebehälter (32) Auswerfen des in der Dosierhöhle befindlichen abgemessenen Substratmaterialvolumens (C).

## Claims

1. A process for the production of substrate plugs by compacting, under the action of pressure, loose substrate material, in particular potting compost, wherein the loose substrate material (A) is shaken out into a substantially cylindrical filling chamber (10, 12) and the column (B) of substrate material disposed in the filling chamber (10, 12) is compacted by an axially applied pressure, **characterised in that** then a part of the compressed substrate material disposed in the filling chamber (10, 12) is removed in a measured volume (C).

2. A process according to claim 1 wherein the filling chamber (10, 12) is filled with substrate material to such a height that after compacting the resulting height is equal at least to the height of the removed part.

3. A process according to claim 1 or claim 2 wherein the axially applied pressure is related in accordance with a previously known ratio to the desired final density of the removed volume (C) of substrate material.

4. A process according to one of the preceding claims wherein the measured volume (C) of substrate material is arranged in a receiving container (32) intended for that purpose.

5. Apparatus for carrying out the process according to claim 1 including at least one introduction member for receiving loosely deposited substrate material and at least one substantially cylindrical filling chamber which adjoins the introduction member and which is defined by a substantially cylindrical filling sleeve (10) and a metering volume (14) adjoining same, and at least one compacting member (18) which extends into the filling chamber (10, 12) for compacting the substrate material in the filling chamber.

6. Apparatus according to claim 5 **characterised in that** the compacting member (18) is a stamping member.

7. Apparatus according to claim 5 **characterised in that** the compacting member (18) is a worm screw (18).

8. Apparatus according to one of claims 5 to 7 **characterised in that** the metering volume (14) includes a substantially cylindrical metering cavity (12) adjoining the filling sleeve (10), for receiving a measured volume (C) of substrate material.

9. Apparatus according to one of claims 5 to 8 **characterised in that** the filling sleeve (10) and the metering volume (14) are displaceable relative to each other in a surface substantially perpendicularly to the central axis of the filling sleeve.

10. Apparatus according to claim 9 **characterised by** means (30) co-operating with the metering cavity (12) for ejection into a receiving container (32) intended for that purpose of the measured volume (C) of substrate material disposed in the metering cavity.

## Revendications

1. Procédé de production de tampons de substrat par le tassement sous l'effet de la pression de matière lâche de substrat, notamment de terreau, dans lequel on déverse la matière lâche de substrat (A) dans un espace (10, 12) de remplissage sensiblement cylindrique, et l'on tasse la colonne (B) de matière de substrat se trouvant dans l'espace (10, 12) de remplissage par une pression appliquée axialement, **caractérisé en ce que** l'on évacue ensuite une partie de la matière de substrat pressée se trouvant dans l'espace (10, 12) de remplissage dans un volume (C) de dimension mesuré.

2. Procédé suivant la revendication 1, dans lequel on remplit l'espace (10, 12) de remplissage de la matière de substrat jusqu'à un niveau tel, qu'après le tassement, le niveau obtenu soit égal au moins au niveau de la partie évacuée.

3. Procédé suivant la revendication 1 ou 2, dans lequel la pression appliquée axialement est reliée suivant une relation connue à l'avance à la masse volumique finale souhaitée du volume (C) évacué de matière du substrat.

4. Procédé suivant l'une des revendications précédentes dans lequel on met le volume (C) de dimension mesuré de la matière du substrat dans un récipient (32) de réception destiné à cela.

5. Dispositif pour effectuer le procédé suivant la revendication 1 comprenant au moins un organe d'introduction pour la réception de matière de substrat lâche stockée et au moins un espace de remplissage, sensiblement cylindrique, se raccordant à l'organe d'introduction, qui est défini par un manchon (10) de remplissage sensiblement cylindrique et par un volume (14) de dosage s'y raccordant, et au moins un organe (18) de compression allant jusque dans l'espace (10, 12) de remplissage et destiné à tasser la matière de substrat se trouvant dans l'espace de remplissage.

6. Dispositif suivant la revendication 5, **caractérisé en ce que** l'organe (18) de compression est un fouloir.

7. Dispositif suivant la revendication 5, **caractérisé en ce que** l'organe (18) de compression est une vis (18) hélicoïdale.

8. Dispositif suivant l'une des revendications 5 à 7, **caractérisé en ce que** le volume (14) de dosage comprend une cavité (12) de dosage sensiblement cylindrique se raccordant au manchon (10) de remplissage et destinée à la réception d'un volume (C) de dimension mesuré de la matière du substrat.

9. Dispositif suivant l'une des revendications 5 à 8, **caractérisé en ce que** le manchon (10) de remplissage et le volume (14) de dosage peuvent être déplacés l'un par rapport à l'autre dans une surface sensiblement perpendiculairement à l'axe central du manchon de remplissage.

10. Dispositif suivant la revendication 9, **caractérisé par** des moyens (30) coopérant avec la cavité (12) de dosage et destinés à déverser dans un récipient (32) de réception défini pour cela le volume (C) de matière de substrat mesuré se trouvant dans la cavité de dosage.
